Europäisches Patentamt

(19) European Patent Office

Office européen des brevets

(11) Numéro de publication: **0 167 427**
**B1**

(12) **FASCICULE DE BREVET EUROPEEN**

(45) Date de publication du fascicule du brevet:
**19.11.87**

(21) Numéro de dépôt: **85401044.4**

(22) Date de dépôt: **28.05.85**

(51) Int. Cl.⁴: **B 60 M 1/34,** H 01 R 41/00

(54) **Ensemble de suspension pour rails d'alimentation électrique.**

(30) Priorité: **30.05.84 FR 8408543**

(43) Date de publication de la demande:
**08.01.86 Bulletin 86/2**

(45) Mention de la délivrance du brevet:
**19.11.87 Bulletin 87/47**

(84) Etats contractants désignés:
**AT BE CH DE FR GB IT LI NL SE**

(56) Documents cités:
**CH - A - 485 340**
**DE - A - 2 424 987**
**DE - B - 2 453 754**
**FR - A - 2 185 838**

(73) Titulaire: **C. Delachaux, 119, Avenue Louis-Roche,**
**F-92231 Gennevilliers (FR)**

(72) Inventeur: **Pelletier, Yves, 24, Mail Alphonse Lamartine,**
**Jony Les Moutiers F-95000 Cergy (FR)**

(74) Mandataire: **Martin, Jean-Jacques et al, Cabinet**
**REGIMBEAU 26, Avenue Kléber, F-75116 Paris (FR)**

## Description

La présente invention concerne les ensembles de suspension pous rails d'alimentation électrique.

Plus précisément, l'invention concerne le montage de rails d'alimentation suspendus pour véhicules et engins électriques mobiles, du type comportant un support de suspension et au moins une griffe fixée à ce support et destinée à retenir un rail suspendu à celle; ce rail est le plus souvent constitué par un profilé métallique presque complètement entouré par une gaine isolante.

On connaît déjà des montages à griffes de ce type et comportant une traverse formée d'une seule pièce avec plusieurs griffes de suspension. Chaque griffe présente, vue de profil, la forme d'un fer à cheval. Les extrémités des branches de ce fer à cheval présentent un rebord dirigé vers l'intérieur et destiné à retenir le rail. La traverse est fixée sur une structure fixe quelconque; à titre d'exemple de réalisation de ce genre, on peut citer le brevet allemand publié DE 2 453 754.

Ce montage de griffes constitue l'art antérieur le plus proche de l'invention dans la mesure où il comporte une traverse perpendiculaire à la direction des rails et supportant plusieurs griffes ou organes de fixation des rails.

De plus, d'autres montages, ne comportant pas de traverse, et dans lesquels une griffe unique est fixée directement à une structure fixe par une boulonnerie constituée d'une tige filetée et d'un écrou, sont couramment utilisés.

Certaines de ces griffes simples sont réalisées en une seule pièce, en métal ou en matière plastique; d'autres sont réalisées en deux ou trois parties assemblées par des vis ou des boulons, comme décrit par exemple dans le brevet français publié FR 2 185 838.

Enfin, il faut remarquer qu'une griffe peut servir à la fixation non pas d'un rail unique, mais d'une pluralité de rails insérés dans une gaine unique.

Tous les ensembles à griffes qui viennent d'être décrits présentent divers inconvénients.

Un premier inconvénient concerne la fixation de l'ensemble à griffes sur la structure fixe. Selon l'art antérieur, comme on l'a rappelé, cette fixation est constituée par une tige filetée coopérant avec un écrou.

Pour les montages qui comportent une griffe simple, on comprend aisément qu'il faut autant de fixations que de griffes. Le temps de montage est donc assez important. En outre, la boulonnerie qui sert à la fixation est généralement réalisée en acier inoxydable, d'un prix de revient assez élevé. Par ailleurs, d'autres inconvénients résultent de la difficulté de réaliser des trous de fixation dans une structure fixe avec une grande précision. Il en découle donc des défauts de parallélisme des rails.

Enfin, les montages de griffes connus peuvent difficilement être parfaitement alignés avec la direction des rails, car ils ont tendance à pivoter autour de l'axe de la tige de fixation. Il en résulte un phénomène de vrillage qui se traduit par des contraintes exercées sur les rails d'alimentation.

Un autre inconvénient de l'art antérieur concerne la mise en place et le blocage des rails eux-mêmes dans les griffes de suspension.

Certaines griffes, comme on l'a expliqué, doivent être ouvertes pour introduire le rail, puis refermées par des vis ou des boulons. Dans un tel cas, le temps de mise en place est important, car il faut serrer un très grand nombre de vis.

Lorsque les rails sont insérés dans une griffe dont les branches sont élastiques, le temps de montage est certes moins important, mais le rail n'est pas maintenu de manière sûre. C'est pourquoi, ce mode de fixation doit être réservé aux rails de poids réduit.

Dans d'autres cas encore, les griffes sont introduites par l'extrémité du rail et doivent être glissées sur toute la longueur de ce rail, c'est-à-dire plusieurs mètres, jusqu'à leur position de montage; de là des temps de montage importants.

La présente invention a pour but de remédier à ces divers inconvénients et propose un ensemble de montage à griffes que l'on peut fixer rapidement à une structure fixe, dont on peut régler facilement et avec précision l'orientation angulaire; en outre, son coût de fixation est peu élevé, et les rails d'alimentation sont mis en place rapidement, et retenus de manière sûre.

A cet effet, l'ensemble de montage à griffes selon l'invention comporte une série d'au moins deux éléments formant demi-griffes jointives et présentant sensiblement la forme d'un T, ce T se composant d'une aile et d'une âme perpendiculaire à ladite aile, la longueur des ailes des éléments en forme de T correspondant à l'espacement entre deux rails d'alimentation, l'âme du T comportant un rebord d'accrochage sur chacune de ses faces opposées, des moyens de liaison coulissante de l'élément en T à une traverse-support, et des moyens de blocage en translation de chacun des deux éléments en T situés aux extrémités de ladite série.

Avec un tel ensemble, le montage des rails est notablement facilité. Tout d'abord, la mise en place des éléments en T sur la traverse est effectuée facilement et rapidement, étant donné que la longeur de cette traverse est de quelques dizaines de centimètres seulement. Ensuite, la mise en place des rails entre les éléments en T est rapide. Il suffit d'écarter puis de resserrer les éléments en T en les faisant simplement coulisser sur la glissière. Le montage est également facilité du fait qu'il est seulement nécessaire de serrer deux vis de fixation au total, quel que soit le nombre des rails. Pour toutes ces raisons, on obtient un gain de temps au montage.

L'entraxe entre des rails parallèles est déterminé par la longueur des ailes des éléments en forme de T, et non pas par la précision de la fixation de la griffe sur la structure fixe. Etant donné que les éléments en forme de T peuvent être fabriqués facilement avec une bonne précision, l'entraxe des rails est bien constant.

Au montage, les éléments en T peuvent coulisser librement, à la demande, sur la traverse de fixation. Ils se positionnent donc de manière naturelle par rapport aux rails sans y introduire de contraintes ou de déformations.

Dans une série de rails parallèles, deux rails voisins sont séparés seulement par l'épaisseur de l'âme d'un élément en T, c'est-à-dire, en d'autres termes, par une paroi unique. Les rails peuvent donc être rapprochés l'un de l'autre et l'encombrement de l'ensemble est diminué. En outre, du fait que les rails sont plus proches l'un de l'autre, l'impédance d'une ligne multiphasée diminue. Par conséquent, les chutes de tension en ligne sont plus faibles.

La traverse fixée sur une structure fixe peut assez facilement être orientée avec précision selon une direction perpendiculaire à la direction du rail. Les éléments en forme de T, qui sont guidés dans la glissière de cette traverse, sont donc également disposés dans l'axe des rails. Le risque de vrillage mentionné ci-dessus n'existe donc pas.

La traverse peut bien entendu être utilisée directement comme console; dans ce cas sa longueur est augmentée et elle vient se fixer directement à une structure fixe.

La diminution du nombre de vis de fixation contribue à la réduction du prix de revient. Les griffes de suspension de l'art antérieur comportent fréquemment une fixation en acier inoxydable dont le prix est élevé. Le prix au niveau du constructeur est donc diminué. Enfin, l'intervalle entre deux demi griffes selon l'invention est prédéterminé, ce qui prédétermine le serrage du rail et permet sa dilatation.

L'invention est exposée ci-après plus en détail à l'aide de dessins représentant seulement un mode d'exécution, donné à titre d'exemple préférentiel. Sur les dessins annexés:

la figure 1 représente schématiquement un ensemble de griffes de suspension et leur montage réalisés conformément à la présente invention; la vue est prise perpendiculaire aux rails, selon la section I-I de la figure 2, les griffes n'étant pas représentées coupées;

la figure 2 représente schématiquement une vue de côté prise parallèlement aux rails du montage des griffes représenté sur la figure 1;

la figure 3 représente une vue de côté d'un élément en forme de T constituant la griffe de suspension latérale (extrémité de l'assemblage) représentée sur les figures 1 et 2.

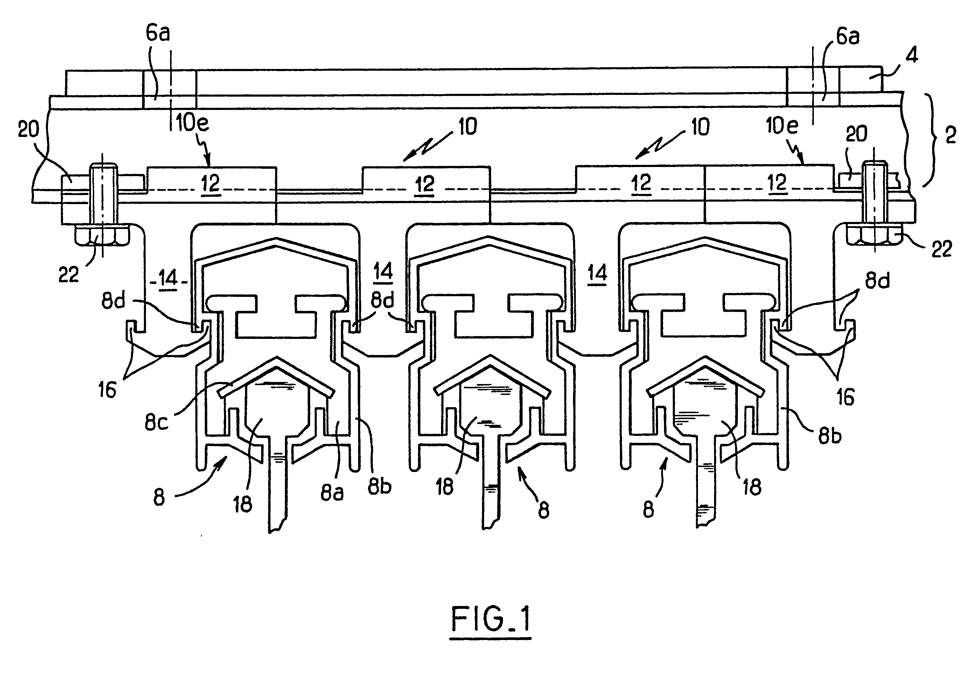

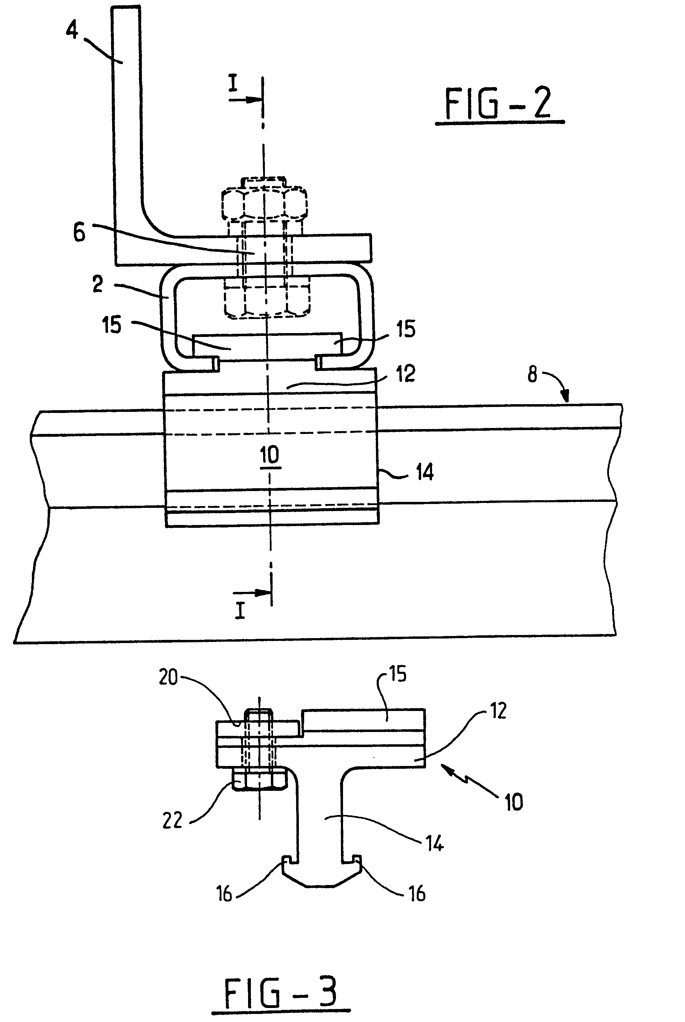

Le montage de griffes de suspension représenté sur les figures 1 et 2 comprend une traverse 2. Cette traverse est fixée à une structure fixe, non représentée, constituée par exemple par un portique, une potence ou un plafond, par l'intermédiaire d'une cornière 4 qui fait partie de cetter structure fixe. La traverse est fixée à la cornière perpendiculairement à la direction du rail conducteur 8 au moyen de deux boulons 6. Aux emplacements des boulons 6, la traverse est munie de lumières latérales 6a, permettant le passage d'un outil de serrage des boulons 6. Vue de bout (figure 2), elle présente une section en forme de C dont l'ouverture est dirigée vers le bas. Sa longueur est déterminée en fonction du nombre d'éléments en forme de T qu'elle est destinée à supporter, ce nombre étant lui-même déterminé par le nombre de rails conducteurs que l'on veut installer. En outre, la traverse 2 peut servir de support à un équipement complémentaire. La longueur de la traverse permet d'avoir un entraxe relativement grand entre les trous de fixation des boulons 6, ce qui permet de l'orienter perpendiculairement à la direction du rail avec une bonne précision sans grande difficulté.

Comme le montrent les dessins, particulièrement la figure 3, chaque élément en forme de T se compose d'une aile 12 et d'une âme 14 perpendiculaire à l'aile 12. Dans l'exemple décrit, les éléments 10 sont réalisés en Macrolon 6030®, qui est un polycarbonate rigide. Des moyens de liaison coulissante de l'élément 10 sur la traverse 2 sont formés sur l'aile 12. Ces moyens de liaison sont constitués par un tenon 15 en T inversé formé d'une seule pièce avec le reste de l'élément 10. Le tenon 15 est engagé par glissement dans l'ouverture de la traverse 2 par l'une de ses extrémités. Etant donné que la traverse n'est pas très longue cette opération est très rapide. Deux rebords d'accrochage 16 sont prévus à l'extrémité inférieure de l'âme 14, de part et d'autre de celle-ci. Les rebords 16 sont destinés à coopérer avec le rail conducteur qui peut être en cuivre et qui, dans l'exemple représenté, se compose lui-même d'une âme 8a d'aluminum, entourée d'une gaine isolante en matière plastique 8b et de plages de frottement rapportées en acier inoxydable 8c disposées en V. La gaine isolante 8b isole le conducteur vis-à-vis de la structure fixe et évite les risques d'électrocution. Pour plus de sécurité, des lèvres prévues à la partie inférieure du rail interdisent le contact avec la partie conductrice du rail. Un frotteur 18 représenté schématiquement sur la figure 1, est engagé entre les lèvres de la gaine. Il est pressé contre les plaques de frottement 8c dont la disposition en V assure son centrage.

Sur la figure 1, quatre éléments 10 sont fixés sur la traverse 2, pour suspendre trois rails 8, mais on aurait pu en prévoir davantage. Par exemple, avec sept éléments, on suspendrait six rails conducteurs. Les éléments 10 sont jointifs et ils sont serrés l'un contre l'autre. La longueur de l'aile 12, dans la direction longitudinale de la traverse 2, est déterminée en fonction de la largeur des rails 8 de manière que, lorsque les extrémités 10 sont en butée l'un contre l'autre, l'écartement des rails soit parfaitement réglé. On remarque que ces derniers sont séparés seulement par l'épaisseur de l'âme 14. Ils peuvent donc être disposés avec un entraxe rapproché, par exemple 50 mm, pour un courant de 1000 A.

Seuls, les éléments extrêmes situés à gauche et à droite de la série des éléments en T sont immobilisés sur la traverse 2. Cette immobilisation est obtenue au moyen d'une plaque 20 formant écrou, plus large que l'ouverture de la traverse 2, et d'une vis 22. Le tenon 15 a également pour fonction d'empêcher la rotation de la plaque 20.

On remarque que tous les éléments 10 de la série fixée sur la traverse sont identiques. L'élément 10e situé à droite sur la figure 1, a simplement été retourné avant d'être glissé sur la traverse. Les deux éléments 10 situés entre les éléments extrêmes 10e comportent un trou traversant pour le passage d'une vis qui n'est pas utilisés, mais cela ne présente aucun inconvénient. Il est en effet plus facile de fabriquer un seul type d'éléments.

Le montage des rails 8 est effectué de manière simple en espaçant suffisamment les éléments pour permettre d'introduire le rail entre les âmes 14, puis en les resserrant de manière à engager les rebords prévus dans la gaine du rail dans les rebords d'accrochage 8d. Avant le serrage des vis 22, les éléments 10 peuvent se déplacer librement sur la traverse 2. Ils s'alignent donc à la demande sur les rails 8. Quel que soit le nombre de rails, il y a seulement deux vis à serrer, ce qui permet un gain de temps. Les rails sont serrés à une côte prédéterminé telle qu'elle permette leur dilatation.

**Revendications**

1. Ensemble de suspension de rails d'alimentation électrique, comprenant une traverse (2), des moyens de fixation (6) de cette traverse sur une structure fixe (4) selon une direction perpendiculaire à celle des rails d'alimentation (8), et des organes de suspension des rails à la traverse, caractérisé en ce qu'il comporte une série d'au moins deux éléments (10) formant demi-griffes jointives et présentant sensiblement la forme d'un T, ce T se composant d'une aile (12) et d'une âme (14) perpendiculaire à ladite aile (12), la longueur des ailes des éléments en forme de T correspondant à l'espacement entre deux rails d'alimentation (8), l'âme (14) du T comportant un rebord d'accrochage (16) sur chacune de des faces opposées, des moyens de liaison coulissante de chaque élément en T (10) à ladite traverse (2), et des moyens de blocage en translation (20, 22) de chacun des deux éléments en T (10e) situés aux deux extrémités de ladite série.

2. Ensemble selon la revendication 1, caractérisé en ce que les moyens de liaison coulissante de chacun des éléments en T à la traverse sont constitués par un tenon (15) à profil en T inversé solidaire de l'aile dudit élément (10), et par une glissière formée dans la traverse (2) et adaptée à recevoir ledit tenon (15).

3. Ensemble selon la revendication 1 ou 2, caractérisé en ce que les moyens de blocage des éléments en forme de T extrêmes sont constitués par une vis (22) et par une plaque de retenue (20), ladite plaque de retenue étant située dans un décrochement formé dans l'aile du T, la vis (22) traversant ladite aile.

4. Elément en T tel que defini dans une des revendications 1 à 3.

**Patentansprüche**

1. Aufhängungssystem für elektrische Stromzufuhrschienen, mit einem Querbalken (2), Mitteln (6) zur Befestigung dieses Querbalkens an einer festen Struktur (4) längs einer zu den Stromzufuhrschienen (8) senkrechten Richtung und Aufhängorganen für die Schienen an den Querbalken, dadurch gekennzeichnet, dass das System einer Reihe von wenigstens zwei Elementen (10), die aneinanderstossende Halb-Aufnahmevorrichtungen bilden und im wesentlichen die Form eines T aufweisen, wobei sich dieses T aus einem Flansch (12) und einem zu dem Flansch (12) senkrechten Steg (14) zusammensetzt und die Länge der Flansche der T-förmigen Elemente dem Abstand zwischen zwei Stromzufuhrschienen (8) entspricht, der Steg (14) des T auf seinen beiden entgegengesetzten Seiten einen Rand (16) zum Verhaken aufweist, verschiebbare Verbindungsmittel für jedes T-Element (10) an dem Querbalken (2) und Verschiebungsblockierungsmittel (20, 22) für jedes der sich an den zwei Enden der Reihe befindenden T-Elemente (10e).

2. System nach Anspruch 1, dadurch gekennzeichnet, dass die verschiebbaren Verbindungsmittel für jedes der T-Elemente an dem Querbalken von einem Mitnehmer (15) mit dem Querschnitt eines umgekehrten T, welcher fest mit dem Flansch (12) des Elements (10) verbunden ist, und einer Gleitschiene gebildet sind, die in dem Querbalken (2) ausgebildet ist und den Mitnehmer (15) aufnehmen kann.

3. System nach Anspruch 1 oder 3, dadurch gekennzeichnet, dass die Blockierungsmittel für die T-förmigen Endelemente von einer Schraube (22) und einer Halteplatte (20) gebildet sind, wobei sich die Halteplatte in einem in dem Flansch T gebildeten Absatz befindet und die Schraube (22) den Flansch durchquert.

4. T-Element wie es in einem der Ansprüche 1 bis 3 definiert ist.

**Claims**

1. An assembly for suspending electricity power supply rails, the assembly comprising a cross member (2) fixing means (6) for fixing said cross member to a fixed structure (4) in a direction which is perpendicular to the direction of the power supply rails (8), and members for suspending the rails from said cross member; characterized in that it comprises a series of at least two generally T-shaped elements (10) defining joined half-clamps, each comprising a crossbar (12) and a riser (14) perpendicular to said crossbar (12), with the crossbar length corresponding to the spacing between two power supply rails (8), and the riser (14) of the T including a hooking rim (16) on each of the opposite faces thereof, means for slidably connecting each T-shaped element (10) to said cross member (2), and means (20, 22) for locking the two endmost T-shaped elements (10e) in said series against translation.

2. An assembly according to claim 1, wherein said means for slidably connecting each T-shaped element to said cross member are constituted by a stud (15) having an inverted T cross-section and fixed to the crossbar (12) of said element (10), and by a slideway formed in said cross member (2) and adapted to receive said stud (15).

3. An assembly according to claim 1, wherein said means for locking each of said endmost T-shaped elements are constituted by a screw (22) and a retaining plate (20), said retaining plate being located in a recess formed in the crossbar of the T, and said screw (22) passing through said crossbar.

4. A T-shaped element as defined in any one of claims 1 to 3.

FIG.1

FIG-2

FIG-3